# EUROPEAN PATENT APPLICATION

(11) **EP 4 787 876 A1**
(43) Date of publication of application: **05.08.2026**
(21) Application number: 24888849.7
(22) Date of filing: 11.04.2024
(51) Int. Cl.: H04N 23/52, H04N 23/68, G03B 5/00, H04N 23/54, H04N 23/55, H04N 23/90, G03B 17/12

(54) **ELECTRONIC DEVICE AND METHOD FOR REDUCING CAMERA NOISE**

(30) Priority: 07.11.2023 KR 20230152807; 05.02.2024 KR 20240017515
(71) Applicant: Samsung Electronics Co., Ltd., Suwon-si, Gyeonggi-do 16677 (KR)
(72) Inventor: JUNG, Kioh, Suwon-si, Gyeonggi-do 16677 (KR); SHIM, Jaekyu, Suwon-si, Gyeonggi-do 16677 (KR); JUN, Eunsuk, Suwon-si, Gyeonggi-do 16677 (KR); CHOI, Soonkyoung, Suwon-si, Gyeonggi-do 16677 (KR)
(74) Representative: Gulde & Partner
(86) International application number: PCT/KR2024/004864
(87) International publication number: WO 2025/100646

(57) **Abstract**

An electronic device and a method for reducing camera noise are provided. The electronic device comprises: a plurality of cameras including a first camera and a second camera; at least one processor; and a memory for storing instructions executed by the at least one processor. At least one of the plurality of cameras includes an OIS module. The OIS module includes: an OIS carrier including at least one from among a lens, an image sensor and a prism; and a VCM driving unit. The OIS module controls a position in at least one direction from among pitch, roll and yaw. The instructions stored in the memory cause the electronic device to perform the operations of: individually controlling the power source of the OIS module; performing a first noise reduction process after applying the power source to a first OIS module of the first camera when the first camera in a standby state is selected; and performing a second noise reduction process before cutting off the power source to the second OIS module of the second camera when the second camera in an operating state is switched to the standby state.

## Description

### [Technical Field]

Embodiments of the disclosure relate to an electronic device and a method and, more specifically, to an electronic device and a method for reducing noise in a camera, for example.

### [Background Art]

An electronic device may include a plurality of cameras performing various functions. For example, the plurality of cameras may include a general camera, an ultra-wide-angle camera, a wide-angle camera, and a telephoto camera. When a user adjusts a field of view (or a magnification), the electronic device may switch from a currently used camera to a camera corresponding to the adjusted field of view.

In addition, all or some of the plurality of cameras may include an optical image stabilization (OIS) module. The OIS module may prevent degradation of image quality due to vibration such as hand shaking. The electronic device may supply power to the cameras to operate the cameras (or the OIS module).

For example, the electronic device may continuously supply power to all cameras so that any one of the plurality of cameras can be operated at any time. Alternatively, the electronic device may not supply power to a camera in a standby state (e.g., an unused state) to reduce power consumption. When a camera transitions between a standby state and an operating state, the electronic device may supply power to a camera transitioning from the standby state to the operating state, and may cut off power to a camera transitioning from the operating state to the standby state.

The above information may be provided as background technology (related art) for facilitating understanding of the disclosure. No claim or determination is made as to whether any of the above-described content may be applicable as prior art related to the disclosure.

### [Disclosure of Invention]

### [Solution to Problem]

An electronic device according to various embodiments of the disclosure may include a plurality of cameras including a first camera and a second camera, at least one processor, and a memory 130 configured to store instructions that are executed by the at least one processor. At least one of the plurality of cameras may include an optical image stabilization (OIS) module. The OIS module may include an OIS carrier including at least one of a lens, an image sensor, and a prism, and a voice coil motor (VCM) driver. The OIS module may control a position in at least one of a pitch direction, a roll direction, and a yaw direction. The instructions stored in the memory may cause the electronic device to individually control power to the OIS module. The instructions stored in the memory may cause the electronic device to, when the first camera in a standby state is selected, perform a first noise reduction process after supplying power to a first OIS module of the first camera. The instructions stored in the memory may cause the electronic device to, when the second camera transitions from an operating state to a standby state, perform a second noise reduction process before cutting off power to a second OIS module of the second camera.

A noise reduction process of an electronic device according to various embodiments of the disclosure may be executed in an electronic device including a plurality of cameras including a first camera and a second camera. The method may include individually controlling power to an OIS module included in at least one of the plurality of cameras. The method may include controlling the position of the OIS module in at least one of a pitch direction, a roll direction, and a yaw direction. The method may include, when the first camera in a standby state is selected, performing a first noise reduction process after supplying power to a first OIS module of the first camera. The method may include, when the second camera transitions from an operating state to a standby state, performing a second noise reduction process before cutting off power to a second OIS module of the second camera.

Various embodiments of the disclosure may provide a non-transitory computer-readable storage medium storing one or more programs for performing a noise reduction process of an electronic device. The one or more programs may include instructions that, when executed by an electronic device having a plurality of cameras, cause the electronic device to individually control power to an OIS module included in at least one of the plurality of cameras. The one or more programs may include instructions that cause the electronic device to control a position of the OIS module in at least one of a pitch direction, a roll direction, and a yaw direction. The one or more programs may include instructions that cause the electronic device to, when the first camera in a standby state is selected, perform a first noise reduction process after supplying power to a first OIS module of the first camera. The one or more programs may include instructions that cause the electronic device to, when the second camera transitions from an operating state to a standby state, perform a second noise reduction process before cutting off power to a second OIS module of the second camera.

### [Brief Description of Drawings]

FIG. 1 is a block diagram of an electronic device in a network environment according to various embodiments.
FIG. 2A is a block diagram illustrating a configuration of an electronic device according to various embodiments.
FIG. 2B illustrates a rear surface of an electronic device according to various embodiments.
FIG. 2C is a block diagram illustrating a camera module according to various embodiments.
FIG. 3 is a simplified block diagram of an electronic device according to various embodiments.
FIG. 4 illustrates a structure of a camera according to various embodiments.
FIGS. 5A, 5B, 5C, and 5D each illustrate an OIS function according to various embodiments.
FIG. 6 is a flowchart illustrating a process of switching between a normal mode and a stabilization mode according to various embodiments.
FIG. 7 illustrates power of a camera being switched according to various embodiments.
FIGS. 8A and 8B each illustrate noise generated in an OIS module according to various embodiments.
FIG. 9 is a flowchart illustrating a first noise reduction process performed when power is supplied to an OIS module according to various embodiments.
FIG. 10A illustrates a position of an OIS carrier in a first noise reduction process according to various embodiments.
FIG. 10B illustrates a position of an OIS carrier after a start of a first noise reduction process according to various embodiments.
FIG. 11 is a flowchart illustrating a second noise reduction process performed when power to an OIS module is cut off, according to various embodiments.
FIG. 12 illustrates a position of an OIS carrier in a second noise reduction process according to various embodiments.
FIGS. 13A and 13B each illustrate a recorded signal in a state in which a camera is switched depending on whether a noise reduction process is performed, according to various embodiments.
FIG. 14 is a flowchart illustrating a noise reduction process according to various embodiments.

### [Mode for the Invention]

Hereinafter, embodiments of the disclosure will be described in detail with reference to the accompanying drawings such that those skilled in the art to which the disclosure pertains can easily implement the disclosure. However, the disclosure may be implemented in various forms and is not limited to the embodiments described herein. In describing the drawings, the same or similar reference numerals may be used for the same or similar components. In addition, in the drawings and the related description, descriptions of well-known functions and configurations may be omitted for clarity and conciseness.

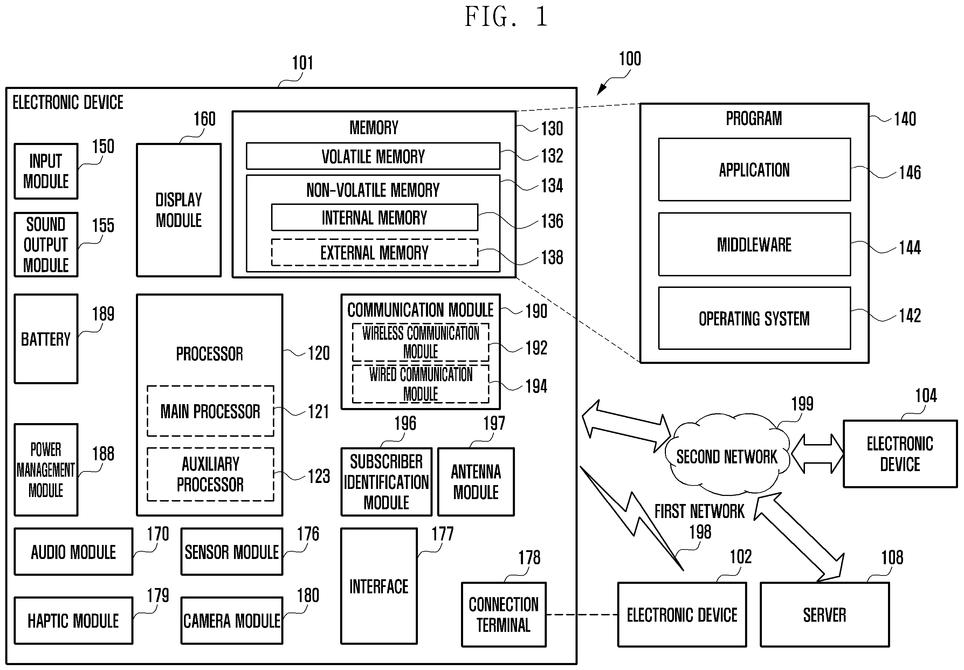

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

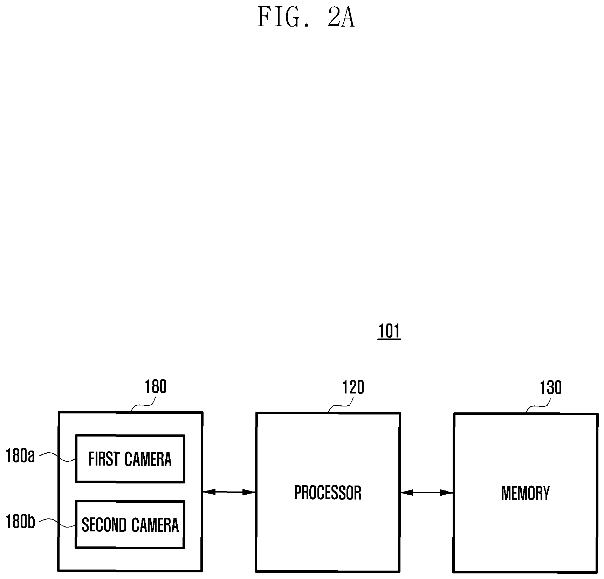

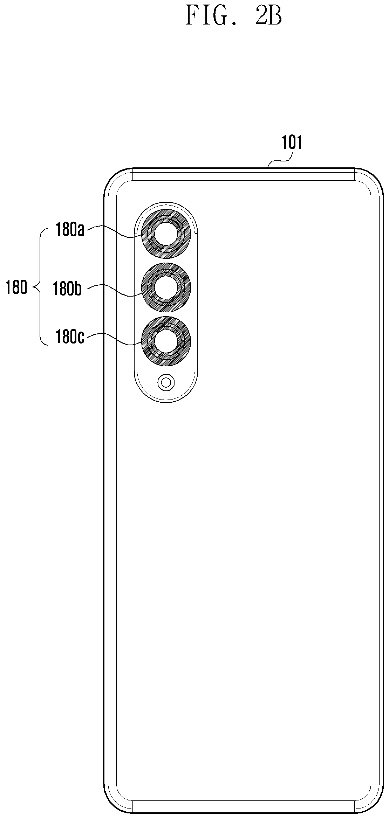

FIG. 2A is a block diagram illustrating a configuration of an electronic device according to various embodiments, and FIG. 2B illustrates a rear surface of an electronic device according to various embodiments. FIGS. 2A and 2B will be described together.

Referring to FIG. 2A, the electronic device 101 may include a camera 180, a memory 130, and a processor 120. The camera 180 (e.g., the camera 180 of FIG. 1) may include a plurality of cameras. For example, as illustrated in FIG. 2B, the plurality of cameras 180 may be disposed on a rear surface of the electronic device 101. The plurality of cameras may include a first camera 180a, a second camera 180b, and/or a third camera 180c. Although the first camera 180a and the second camera 180b are illustrated in FIG. 2A, as illustrated in FIG. 2B, the plurality of cameras may include three or more cameras. As an example, the plurality of cameras may include a general camera, a telephoto camera, and/or a wide-angle camera. The first camera 180a or the second camera 180b may capture an image under control of the processor 120 (e.g., the processor 120 of FIG. 1). For example, the image may be a still image and/or a moving image (e.g., a video). The first camera 180a or the second camera 180b may display a captured image as a preview or store the captured image in the memory.

Each of the plurality of cameras 180 may include an optical image stabilization (OIS) module. The OIS module may include an OIS carrier and a voice coil motor (VCM) driver. The OIS carrier may include a lens (or a lens assembly), an image sensor, and/or a prism, and may control a position and/or an angle of the OIS carrier corresponding to each axis to compensate for rotation or vibration in pitch, roll, and/or yaw axis directions. For example, the VCM driver may move the OIS carrier.

The memory 130 (e.g., the memory 130 of FIG. 1) may store data, algorithms, programs, instructions, and the like for performing functions of the electronic device 101 (e.g., the electronic device 101 of FIG. 1). Instructions stored in the memory 130 may be loaded to the processor 120 and may be executed by the processor 120. For example, the memory 130 may store captured images (e.g., still images or videos).

The processor 120 may control components of the electronic device 101 (e.g., the electronic device of FIG. 1). The electronic device 101 may include at least one processor 120.

The processor 120 may individually control power to the OIS module included in the camera 180. The processor 120 may supply power to or cut off power from an OIS module of the first camera 180a and/or an OIS module of the second camera 180b. A user may adjust a field of view of the camera 180 while capturing an image. The processor 120 may select one camera (or switch from one camera to another camera) based on the adjusted field of view, and may continue capturing with the selected camera. As an example, the processor 120 may capture video using the second camera 180b. When the field of view is changed according to a user input, the processor 120 may select the first camera 180a corresponding to the changed field of view. The processor 120 may switch from the second camera 180b to the first camera 180a and may continue capturing the video.

When the first camera 180a is selected, the processor 120 may supply power to a first OIS module of the selected first camera 180a and then perform a first noise reduction process (or a first noise reduction operation). For example, the first noise reduction process may be a process (or an operation) of removing (or reducing) noise performed after power is supplied. Alternatively, the processor 120 may perform a second noise reduction process (or a second noise reduction operation) before cutting off power to a second OIS module of the unselected second camera 180b. For example, the second noise reduction process may be a process (or an operation) of removing (or reducing) noise performed before power is cut off.

For example, the first noise reduction process may be performed as follows. The processor 120 may identify a position of a first OIS carrier included in the first OIS module. As an example, the electronic device 101 may identify the position of the first OIS carrier before supplying power to a first VCM driver. The processor 120 may supply power to the first VCM driver and then gradually move the first OIS carrier to a target position to perform the first noise reduction process. For example, when power to the first OIS module is cut off, the first OIS carrier may be positioned at a base. The position of the base may be a maximum position to which the first OIS carrier may move in the gravity direction. The processor 120 may gradually move the first OIS carrier from the base to the target position. The target position may be a position of a preconfigured central point or a position of a preconfigured central angle. For example, the preconfigured central point may be a position of the OIS carrier at which light incident toward a center of the lens along an optical axis direction of the lens may substantially reach a center of the image sensor.

The processor 120 may move the first OIS carrier while increasing a gain of the first VCM driver included in the first OIS module from a first gain to a second gain during a preconfigured time. For example, the first gain may be a smallest gain among gains of the first VCM driver. The processor 120 may increase the gain from the first gain to the second gain continuously or may increase the gain discontinuously in one or more steps. As an example, when the first gain is 1 and the second gain is 3, the processor 120 may continuously increase the gain from 1 to 3. Alternatively, the processor 120 may increase the gain stepwise to 1, 2, and 3. The processor 120 may configure the gain of the first VCM driver to a third gain during a remaining time after the preconfigured time and may move the first OIS carrier to a target position. For example, the third gain may be a default gain. The second gain may be equal to or lower than the third gain. The remaining time may be a time during which the first OIS carrier moves to the target position after the preconfigured time. When the first OIS carrier is moved to the target position, the processor 120 may initialize an accumulated value related to an angle of the electronic device 101 and may terminate the first noise reduction process. For example, the electronic device 101 may include a gyro sensor. The gyro sensor may detect an angular velocity of the electronic device 101. The target position of the OIS carrier may be a position determined based on a tilt angle of the electronic device 101. The electronic device 101 may calculate an angle of the electronic device 101 by integrating the detected angular velocity and may move the OIS carrier to perform correction of tilt based on the calculated angle. When the OIS carrier is positioned at a central point (e.g., the target position), the electronic device 101 may configure the angle of the electronic device 101 as a reference angle (e.g., 0 degrees) and may correct the tilt angle of the electronic device 101 based on the reference angle. Accordingly, the electronic device 101 may reset an accumulated value related to the angle of the electronic device 101 (e.g., an integrated value of the angular velocity detected by the gyro sensor).

In addition, the first camera 180a may support a stabilization mode. For example, the stabilization mode may be referred to as a tripod mode. When a movement of the electronic device 101 is less than a certain magnitude, a shake prevention function may rather act as a disturbance.

For example, a gain of an OIS function may be configured to a high value (or a default value or a calibration value) in order to compensate for disturbance. When disturbance (e.g., shaking of the electronic device 101) exists, the OIS function may compensate for the disturbance using a high gain. When there is no disturbance, a fixed state may be most stable. The electronic device 101 including the OIS function may control a position of an OIS carrier such that the OIS carrier is positioned at a certain point even when there is no disturbance. In other words, when the OIS function of the electronic device 101 is activated, the OIS carrier may slightly vibrate even when there is no disturbance (or when shaking of the electronic device 101 is minimal). A degree of vibration of the OIS carrier may be greater when the gain of the OIS function is high. Accordingly, when the gain of the OIS function is configured to a low value in an environment without disturbance, the electronic device 101 may acquire a clearer image.

A stabilization mode may be a mode in which control of the OIS carrier is suppressed when a movement of the electronic device 101 is less than a predetermined magnitude. For example, the stabilization mode may be a mode in which shaking of the electronic device 101 is detected and a gain is changed according to the detected shaking of the electronic device 101. When the processor 120 performs a noise reduction process in a state in which an entry function of the stabilization mode is activated (or a gain change function is activated), the stabilization mode may affect the noise reduction process. Accordingly, when the first camera 180a supports the stabilization mode, the processor 120 may deactivate the entry function of the stabilization mode and may perform the noise reduction process. The processor 120 may activate the entry function of the stabilization mode after the noise reduction process is completed.

For example, before cutting off power to the second OIS module of the second camera 180b, the processor 120 may perform the second noise reduction process by gradually moving, in the gravity direction, the second OIS carrier included in the second OIS module to a position adjacent to the base. For example, a position of the base may be a maximum position to which the second OIS carrier may move in the gravity direction.

First, the processor 120 may identify the gravity direction. For example, the processor 120 may identify the gravity direction by detecting a change of a magnetic force using a Hall sensor. The OIS carrier may include a magnet, and a camera housing may include the Hall sensor. The processor 120 may temporarily cut off power to the second OIS module for a preconfigured time. The preconfigured time for cutting off power may be configured to a time during which the second OIS carrier does not reach the base (i.e., a time shorter than a time required to reach the base). Due to the cut-off of power, the second OIS carrier may freely fall in the gravity direction. According to the free fall of the second OIS carrier, the magnet included in the second OIS carrier may move, and a magnetic force detected by the Hall sensor may change due to movement of the magnet. For example, when the changing magnetic force is negative, the processor 120 may determine that the second OIS carrier has moved in a first direction and may identify the first direction as the gravity direction. Alternatively, when the changing magnetic force is positive, the processor 120 may determine that the second OIS carrier has moved in a second direction and may identify the second direction as the gravity direction.

Alternatively, the processor 120 may identify the gravity direction based on an acceleration value detected by an acceleration sensor. For example, the acceleration sensor may continuously detect acceleration values. An acceleration value detected for a predetermined time or longer may include a dominant value in one direction. The processor 120 may determine a direction in which the dominant value appears as the gravity direction.

Alternatively, when the processor 120 is unable to identify as a gravity direction based on the acceleration value, the processor 120 may determine a preconfigured direction as the gravity direction. For example, when the OIS carrier is positioned far from the center such that the OIS carrier already reaches an end point (i.e., the base) during free fall or when detection of the gravity direction using the acceleration sensor is difficult due to severe external vibration, the processor 120 may determine the preconfigured direction as the gravity direction.

The processor 120 may move the OIS carrier in the gravity direction. The processor 120 may gradually move the OIS carrier to a position adjacent to the base. For example, the position adjacent to the base may be a position predetermined through calibration. The position determined through calibration may be a position including a predetermined margin from the base and may be a maximum position to which movement from a central position may be controlled. Accordingly, the processor 120 may gradually move the OIS carrier to the position determined through calibration and may cut off power when the OIS carrier reaches the position determined through calibration.

When the second camera 180b supports the stabilization mode, the processor 120 may deactivate the entry function of the stabilization mode and may perform the noise reduction process. The processor 120 may activate the entry function of the stabilization mode after the noise reduction process is completed.

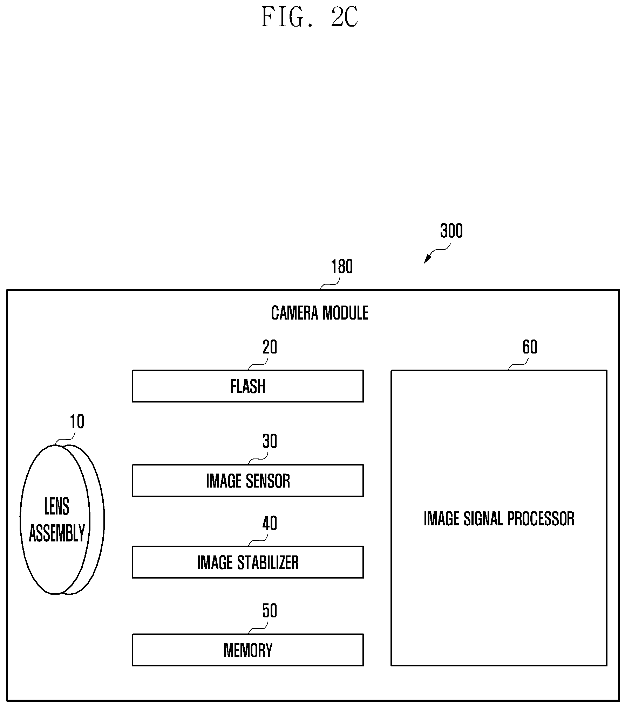

FIG. 2C is a block diagram 300 illustrating a camera module 180 according to various embodiments. Referring to FIG. 2C, the camera module 180 may include a lens assembly 10, a flash 20, an image sensor 30, an image stabilizer 40, a memory 50 (e.g., a buffer memory), or an image signal processor 60. The lens assembly 10 may collect light emitted from a subject of image capture. The lens assembly 10 may include one or more lenses. According to an embodiment, the camera module 180 may include a plurality of lens assemblies 10. In this case, the camera module 180 may configure, for example, a dual camera, a 360-degree camera, or a spherical camera. Some of the plurality of lens assemblies 10 may have the same lens attributes (e.g., field of view, focal length, auto focus, f number, or optical zoom), or at least one lens assembly may have one or more lens attributes different from lens attributes of another lens assembly. The lens assembly 10 may include, for example, a wide-angle lens or a telephoto lens.

The flash 20 may emit light used to enhance light emitted or reflected from the subject. According to an embodiment, the flash 20 may include one or more light emitting diodes (e.g., red-green-blue (RGB) LED, white LED, infrared LED, or ultraviolet LED) or a xenon lamp. The image sensor 30 may acquire an image corresponding to the subject by converting, into an electrical signal, light emitted or reflected from the subject and incident through the lens assembly 10. According to an embodiment, the image sensor 30 may include one image sensor selected from image sensors having different attributes, such as an RGB sensor, a BW black and white sensor, an IR sensor, or a UV sensor, or may include a plurality of image sensors having the same attribute, or a plurality of image sensors having different attributes. Each image sensor included in the image sensor 30 may be implemented using, for example, a CCD (charged coupled device) sensor or a CMOS (complementary metal oxide semiconductor) sensor.

The image stabilizer 40 may move at least one lens included in the lens assembly 10 or the image sensor 30 in a specific direction or may control an operation characteristic of the image sensor 30 (e.g., adjusting read-out timing) in response to movement of the camera module 180 or the electronic device 101 including the camera module 180. This may compensate for at least part of the negative effect of the movement on an image being captured. According to an embodiment, the image stabilizer 40 may detect such movement of the camera module 180 or the electronic device 101 using a gyro sensor (not shown) or an acceleration sensor (not shown) disposed inside or outside the camera module 180. According to an embodiment, the image stabilizer 40 may be implemented as, for example, an optical image stabilizer. The memory 50 may temporarily store at least a part of an image acquired through the image sensor 30 for a subsequent image processing operation. For example, when acquisition of an image is delayed due to a shutter or when a plurality of images are acquired at a high speed, an acquired original image (e.g., a Bayer-patterned image or a high-resolution image) may be stored in the memory 50, and a corresponding copy image (e.g., a lowresolution image) may be previewed through the display module 160. Thereafter, when a designated condition is satisfied (e.g., a user input or a system command), at least a part of the original image stored in the memory 50 may be acquired and processed by, for example, the image signal processor 60. According to an embodiment, the memory 50 may be configured as at least a part of the memory 130 or as a separate memory operating independently therefrom.

The image signal processor 60 may perform one or more image processes on an image acquired through the image sensor 30 or an image stored in the memory 50. The one or more image processes may include, for example, depth map generation, 3D modeling, panorama generation, feature extraction, image synthesis, or image compensation (e.g., noise reduction, resolution adjustment, brightness adjustment, blurring, sharpening, or softening). Additionally or alternatively, the image signal processor 60 may control at least one (e.g., the image sensor 30) of components included in the camera module 180 (e.g., exposure time control or read-out timing control). An image processed by the image signal processor 60 may be stored again in the memory 50 for additional processing or may be provided to an external component (e.g., the memory 130, the display module 160, an electronic device 102, an electronic device 104, or a server 108) of the camera module 180. According to an embodiment, the image signal processor 60 may be configured as at least a part of the processor 120 or as a separate processor operating independently of the processor 120. When the image signal processor 60 is configured as a processor separate from the processor 120, at least one image processed by the image signal processor 60 may be displayed through the display module 160 as it is or after additional image processing by the processor 120.

According to an embodiment, the electronic device 101 may include a plurality of camera modules 180 having different attributes or functions. In this case, for example, at least one of the plurality of camera modules 180 may be a wide-angle camera, and at least another one may be a telephoto camera. Similarly, at least one of the plurality of camera modules 180 may be a front camera, and at least another one may be a rear camera.

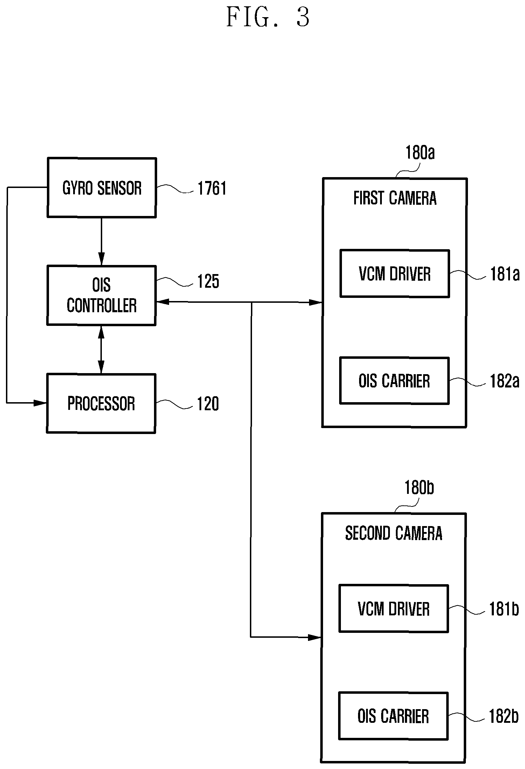

FIG. 3 is a simplified block diagram of an electronic device according to various embodiments. For example, FIG. 3 is a block diagram illustrating a configuration of a controller configured to control an OIS module.

Referring to FIG. 3, a controller configured to control an OIS module may include a gyro sensor 1761, an OIS controller 125, and a processor 120. Each camera 180 may include an OIS module, and the OIS module may include a VCM driver and an OIS carrier. For example, the first camera 180a may include a first OIS module, and the first OIS module may include a first VCM driver 181a and a first OIS carrier 182a. In addition, a second camera 180b may include a second OIS module, and the second OIS module may include a second VCM driver 181b and a second OIS carrier 182b.

The gyro sensor 1761 may detect movement (e.g., shaking or vibration) of the electronic device 101. A gyro signal detected by the gyro sensor 1761 may be input to the OIS controller 125 and/or the processor 120. The processor 120 may control the OIS controller 125, and the OIS controller 125 may process the gyro signal to calculate a target position corresponding to the movement of the electronic device 101. The OIS controller 125 may transmit information on the target position to the VCM drivers 181a, 181b of respective cameras 180. Each VCM driver 181a, 181b may move an OIS carrier to the target position based on the transmitted information on the target position.

For example, when the OIS controller 125 transmits information on the target position to the first VCM driver 181a of the first camera 180a, the first VCM driver 181a may move the first OIS carrier 182a to the target position. Alternatively, when the OIS controller 125 transmits information on the target position to the second VCM driver 181b of the second camera 180b, the second VCM driver 181b may move the second OIS carrier 182b to the target position.

For example, the OIS controller 125 may be included in the processor 120 or the camera 180. As an example, the gyro sensor 1761 and the OIS controller 125 may be included in the first camera 180a or the second camera 180b.

For example, the OIS module may include a gyro sensor 1761, a Hall sensor, and/or a Hall processor. The Hall processor (not shown) may process a sensing signal of a Hall sensor, which detects a magnetic force that changes according to movement of an OIS carrier. For example, the Hall processor may control current of a coil such that a value of the sensing signal of the Hall sensor corresponds to a value associated with the target position, and may control a position of the OIS carrier. The Hall processor may perform feedback control using the value of the sensing signal of the Hall sensor, and a gain of the VCM driver described above may be a gain for the feedback control. As an example, a sensor for detecting a position of the OIS carrier may include, in addition to the Hall sensor, an MR sensor, an optical sensor, or a non-contact sensor using a change of inductance or capacitance.

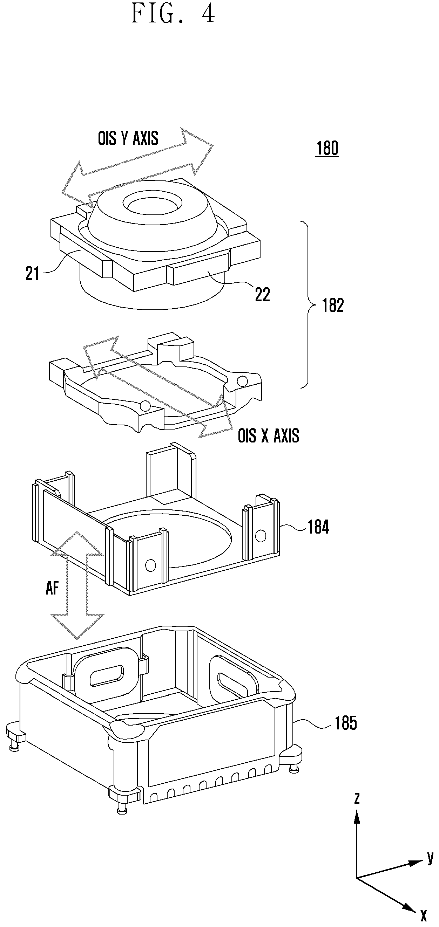

FIG. 4 illustrates a structure of a camera according to various embodiments.

Referring to FIG. 4, a camera 180 (or a camera module) may include an OIS carrier 182, an AF carrier 184, and a camera housing 185. The OIS carrier 182 may include a Y-axis magnet yoke and an X-axis magnet yoke. The Y-axis magnet yoke may move the OIS carrier 182 along a Y-axis, and the X-axis magnet yoke may move the OIS carrier 182 along an X-axis.

The AF carrier 184 may adjust a focal length by moving the OIS carrier 182 along a Z-axis, and the camera housing 185 may include the OIS carrier 182 and the AF carrier 184. The OIS carrier 182 and the AF carrier 184 may include a magnet, and the camera housing 185 may include a Hall sensor. As an example, a first magnet 21 and a second magnet 22 may be disposed on a side surface of the OIS carrier 182 in parallel with an x-axis and a y-axis, respectively. According to movement of the OIS carrier 182 and/or the AF carrier 184, a position of the magnet may also move. For example, the OIS carrier 182 and/or the AF carrier 184 may move in a ball guide manner. The Hall sensor may detect a change of a magnetic force according to movement of the magnet and may identify a moving direction of the OIS carrier 182 and/or the AF carrier 184.

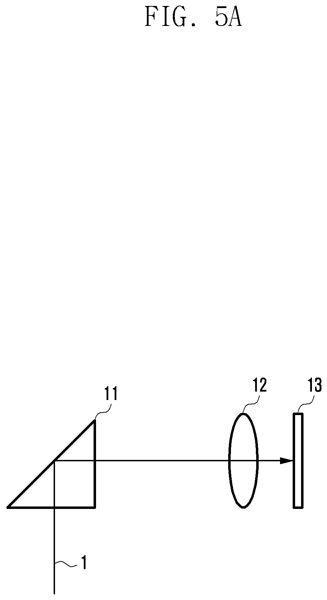

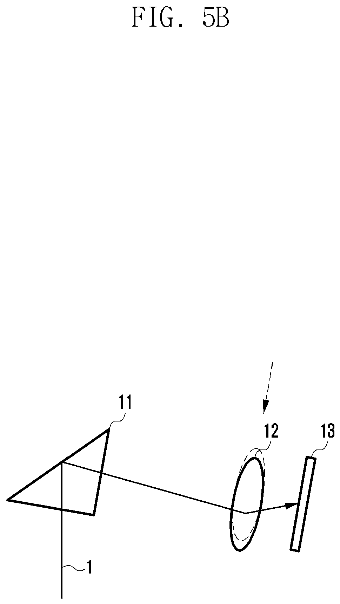

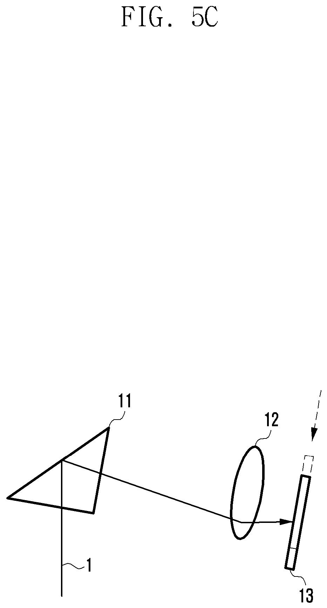

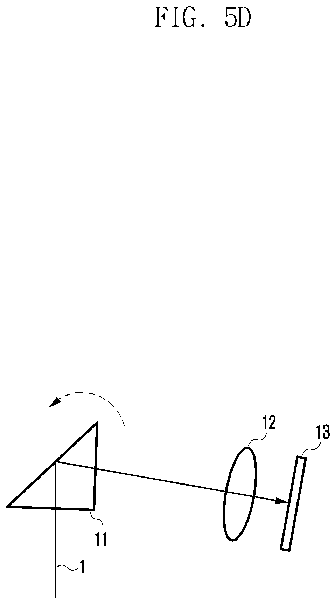

FIG. 5A, FIG. 5B, FIG. 5C, and FIG. 5D each illustrate an OIS function according to various embodiments.

Referring to FIG. 5A, light 1 incident on the camera 180 may be detected by an image sensor 13. For example, the OIS carrier 182 may include a prism 11, a lens 12, and/or the image sensor 13. The light 1 incident on the camera 180 may be refracted by the prism 11, pass through the lens 12, and form an image on the image sensor 13. When the light 1 is detected in a central region of the image sensor 13, focus of the formed image may be achieved.

Referring to FIG. 5B, the image sensor 13 for detecting an image when an OIS function for moving the lens 12 is provided is illustrated. When the camera 180 includes the OIS function for moving the lens 12, the lens 12 may be moved based on shaking information of an electronic device 101. According to movement of the lens 12, the incident light 1 may form an image in a central region of the image sensor 13. Accordingly, focus of the formed image may be achieved.

Referring to FIG. 5C, the image sensor 13 for detecting an image when an OIS function for moving the image sensor 13 is provided is illustrated. When the camera 180 includes the OIS function for moving the image sensor 13, the image sensor 13 may be moved based on shaking information of the electronic device 101. According to movement of the image sensor 13, the incident light 1 may form an image in a central region of the image sensor 13. Accordingly, focus of the formed image may be achieved.

Referring to FIG. 5D, the image sensor 13 for detecting an image when an OIS function for tilting the prism 11 is provided is illustrated. When the camera 180 includes the OIS function for tilting the prism 11, the prism 11 may be rotated based on shaking information of the electronic device 101. According to rotation of the prism 11, the incident light 1 may form an image in a central region of the image sensor 13. Accordingly, focus of the formed image may be achieved.

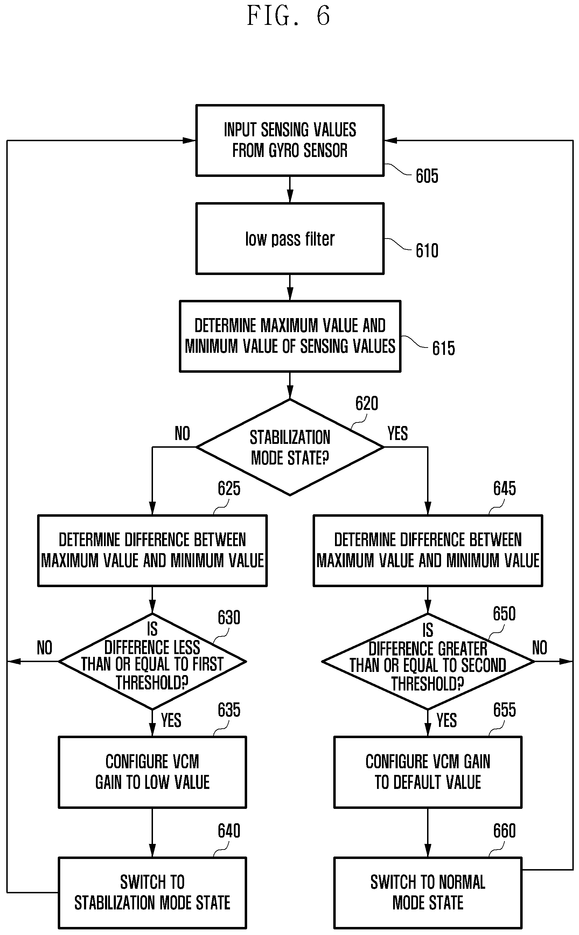

FIG. 6 is a flowchart illustrating a process of switching between a normal mode and a stabilization mode according to various embodiments.

In the following embodiments, respective operations may be performed sequentially, but are not necessarily performed sequentially. For example, an order of the respective operations may be changed, and at least two operations may be performed in parallel.

According to an embodiment, operations 605 to 660 may be understood as being performed by a processor (e.g., the processor 120 of FIG. 2 or the OIS controller 125 of FIG. 3) of an electronic device (e.g., the electronic device 101 of FIG. 2). As described above, the stabilization mode may be a mode in which shaking of the electronic device 101 is detected and a gain is changed according to the detected shaking of the electronic device 101. The normal mode may be a state in which the stabilization mode is deactivated and a position of an OIS carrier is controlled with a preconfigured high gain.

Referring to FIG. 6, the electronic device 101 may receive a sensing value for movement of the electronic device 101 using a gyro sensor 1761 (605). The electronic device 101 may perform low-pass filtering on the input sensing value to remove a high-frequency component (610). The electronic device 101 may determine a maximum value and a minimum value of the sensing value (615).

The electronic device 101 may determine whether a current state is a stabilization mode (620). When the current state is not the stabilization mode (or is the normal mode) (620-NO), the electronic device 101 may determine whether disturbance is small. For example, the electronic device 101 may determine a maximum difference between a maximum value and a minimum value of shaking

(625). The electronic device 101 may compare the determined maximum difference with a first threshold value (630). For example, the first threshold value may be a threshold for maintaining the normal mode. When the maximum difference is greater than the first threshold value (e.g., equal to or greater than, or greater than the first threshold value) (630-NO), shaking of the electronic device 101 is greater than or equal to a predetermined level, and thus the electronic device 101 may maintain the normal mode. The electronic device 101 may continuously receive sensing values from the gyro sensor 1761 (605).

As an example, when the maximum difference is less than the first threshold value (e.g., equal to or less than, or less than the first threshold value) (630-YES), shaking of the electronic device 101 is less than a predetermined level, and thus the electronic device 101 may configure a VCM gain to a low value (635) and switch the normal mode to the stabilization mode (640). For example, the electronic device 101 may change the VCM gain according to a degree of shaking.

As an example, when the current state is the stabilization mode (620-YES), the electronic device 101 may determine a maximum difference between a maximum value and a minimum value (645). The electronic device 101 may compare the determined maximum difference with a second threshold value (650). For example, the second threshold value may be a threshold for maintaining the stabilization mode. When the maximum difference is less than the second threshold value (e.g., equal to or less than, or less than the second threshold value) (650-NO), shaking of the electronic device 101 is less than a predetermined level, and thus the electronic device 101 may maintain the stabilization mode. The electronic device 101 may continuously receive sensing values from the gyro sensor 1761 (605).

As an example, when the maximum difference is greater than the second threshold value (e.g., greater than or equal to, or greater than the second threshold value) (650-YES), shaking of the electronic device 101 is greater than or equal to a predetermined level, and thus the electronic device 101 may configure the VCM gain to a default value (e.g., a calibration value) (655) and switch the stabilization mode to the normal mode (660). The electronic device 101 may control a position of the OIS carrier based on the VCM gain configured to the default value according to a degree of shaking.

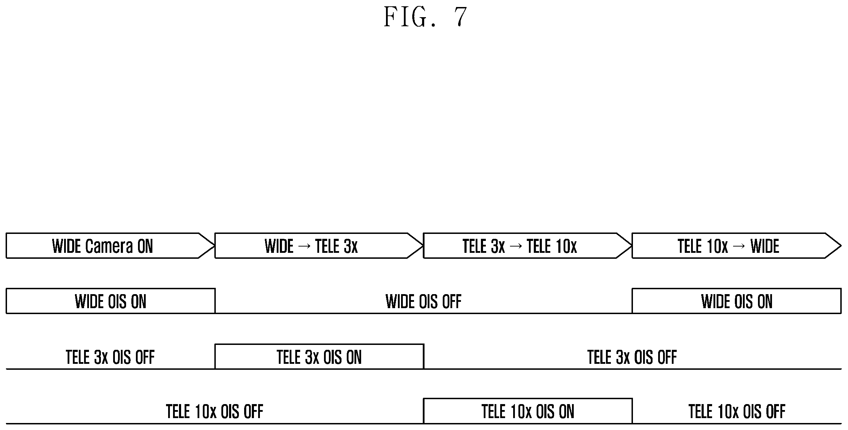

FIG. 7 illustrates power of a camera being switched according to various embodiments.

Referring to FIG. 7, power states of the camera 180 according to camera switching are illustrated. For example, the electronic device 101 may include a wide-angle camera, a 3× zoom camera, and a 10× zoom camera. Each camera may support an OIS function. When the wide-angle camera is a main camera, the electronic device 101 may supply power to the wide-angle camera to turn on the OIS function and may cut off power to the 3× zoom camera and the 10× zoom camera to turn off the OIS function. When the main camera is switched to the 3× zoom camera, the electronic device 101 may supply power to the 3× zoom camera to turn on the OIS function and may cut off power to the wide-angle camera and the 10× zoom camera to turn off the OIS function. When the main camera is switched to the 10× zoom camera, the electronic device 101 may supply power to the 10× zoom camera to turn on the OIS function and may cut off power to the wide-angle camera and the 3× zoom camera to turn off the OIS function.

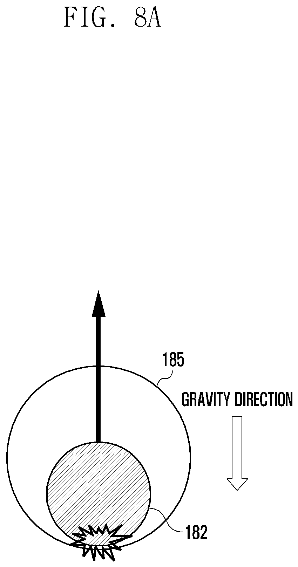

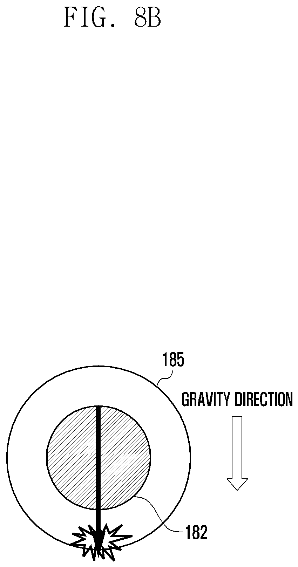

FIG. 8A and FIG. 8B each illustrate noise generated in an OIS module according to various embodiments.

Referring to FIG. 8A, an impact noise generated when power is supplied to the camera 180 is illustrated. Before power is supplied to the camera 180, the OIS carrier 182 may be positioned at a base. When power is supplied to the camera 180, the electronic device 101 may move the OIS carrier 182 from the base to a target position (e.g., a central position). In this case, the OIS carrier 182 may collide with the camera housing 185 due to an initial driving force, and an impact noise may be generated due to the collision. When the camera 180 captures video, the generated impact noise may be recorded as noise in the video and may cause discomfort to a user.

FIG. 8B illustrates an impact noise generated when power to the camera 180 is cut off. Before power to the camera 180 is cut off, the OIS carrier 182 may be positioned spaced apart from the base. When power to the camera 180 is cut off, the OIS carrier 182 may move to the base due to gravity. In this case, the OIS carrier 182 may collide with the camera housing 185 (e.g., a stopper), and an impact noise may be generated due to the collision. As described above, the generated impact noise may be recorded as noise in the video and may cause discomfort to a user.

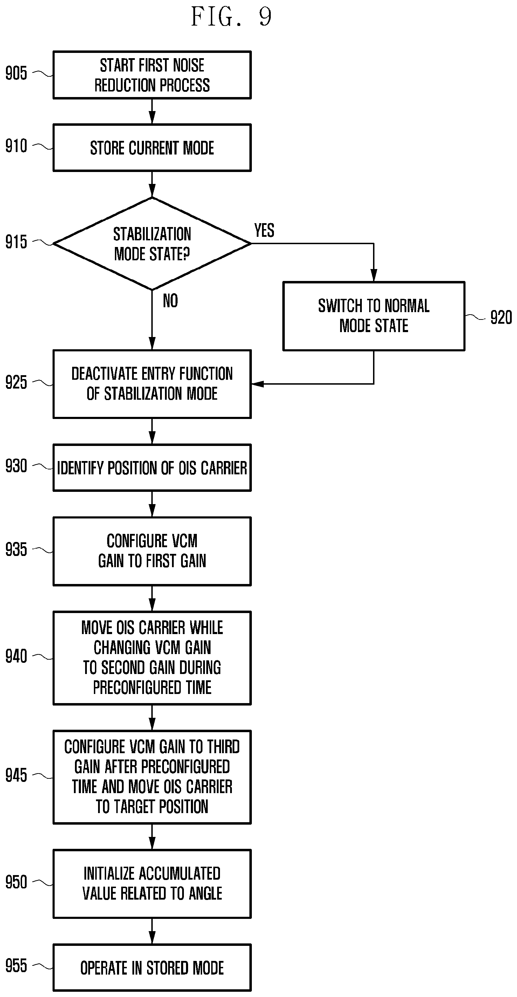

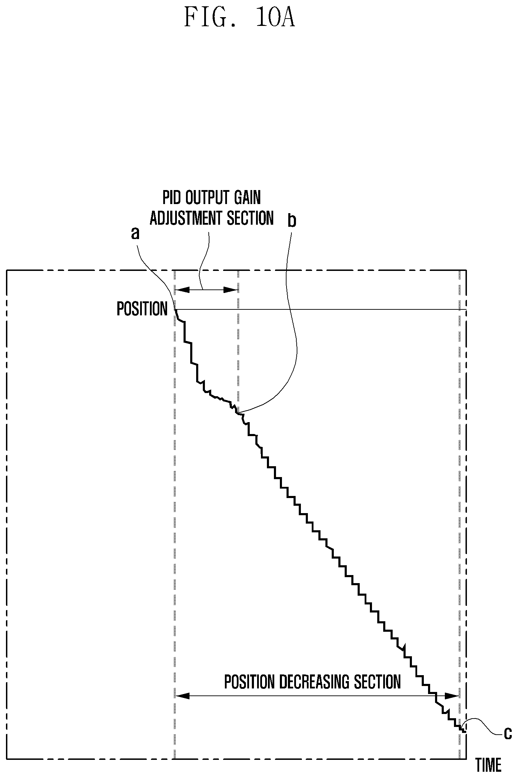

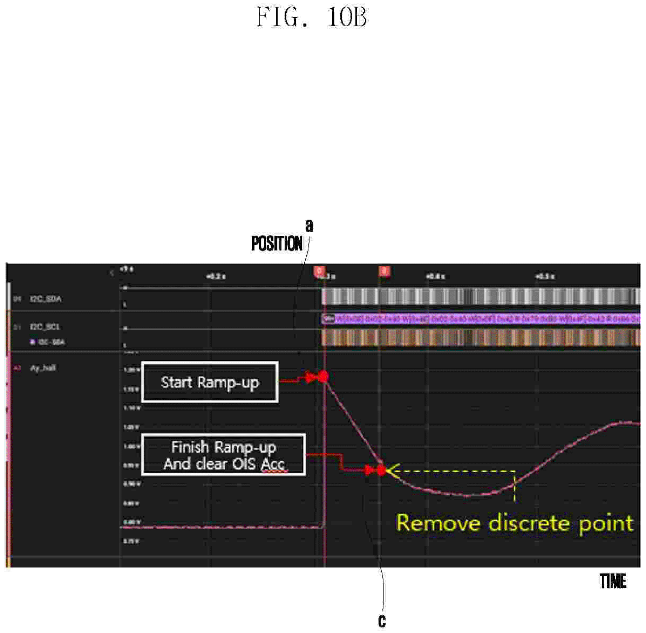

FIG. 9 is a flowchart illustrating a first noise reduction process performed when power is supplied to an OIS module according to various embodiments, FIG. 10A illustrates a position of an OIS carrier during the first noise reduction process according to various embodiments, and FIG. 10B illustrates a position of the OIS carrier after the start of the first noise reduction process according to various embodiments. The following description will be made with reference to FIG. 9, FIG. 10A, and FIG. 10B.

In the following embodiments, respective operations may be performed sequentially, but are not necessarily performed sequentially. For example, an order of the respective operations may be changed, and at least two operations may be performed in parallel.

According to an embodiment, operations 905 to 955 may be understood as being performed by a processor (e.g., the processor 120 of FIG. 2 or the OIS controller 125 of FIG. 3) of an electronic device (e.g., the electronic device 101 of FIG. 2).

Referring to FIG. 9, when power is supplied to the camera 180 (or an OIS module 182), the electronic device 101 may start a first noise reduction process (905). As an example, the electronic device 101 may store a current mode in the memory 130 (910). For example, the electronic device 101 may support a stabilization mode, and the current mode may include a stabilization mode or a normal mode. The electronic device 101 may identify whether the current state is the stabilization mode or the normal mode (915). When the current state is the stabilization mode (915-YES), the electronic device 101 may switch the current state to the normal mode (920) and may deactivate an entry function of the stabilization mode (925). When the current state is not the stabilization mode (or is the normal mode) (915-NO), the electronic device 101 may deactivate the entry function of the stabilization mode (925).

After deactivating the entry function of the stabilization mode, the electronic device 101 may identify a position of the OIS carrier (930). As an example, when the electronic device 101 does not support the stabilization mode, the electronic device 101 may identify the position of the OIS carrier without performing a current state determination process and a mode switching process (or a current state determination operation and a mode switching operation).

For example, the electronic device 101 may include a Hall sensor, a Hall processor, and a processor. The Hall sensor may detect magnetic force information from a magnet of the OIS carrier, and the Hall processor may process the detected magnetic force information. The processor may identify position information of the OIS carrier based on the processed magnetic force information. For example, immediately before power is supplied, the OIS carrier may be positioned at a base. A position of the base may be a maximum position to which a first OIS carrier moves in a gravity direction. An initial position of the OIS carrier (or the position of the base) may correspond to a point "a" shown in FIG. 10A and FIG. 10B.

The electronic device 101 may configure a VCM gain to a first gain (935). For example, the first gain may be the smallest gain among gains of a first VCM driver. As an example, the stabilization mode state and the normal mode state may be states in which set VCM gains are different from each other. Since the electronic device 101 performs a process of configuring a VCM gain to a first gain in the first noise reduction process, the electronic device 101 may perform a process of deactivating the entry function of the stabilization mode without performing a current state determination process and a mode switching process (or a current state determination operation and a mode switching operation).

The electronic device 101 may move the OIS carrier while changing the VCM gain to a second gain during a preconfigured time (940). When increasing the VCM gain from the first gain to the second gain, the electronic device 101 may increase the gain continuously or discontinuously in one or more steps. As an example, when the first gain is 1 and the second gain is 3, the electronic device 101 may increase the gain continuously from 1 to 3, or may increase the gain stepwise to 1, 2, and 3. As an example, when increasing the gain from the first gain to the second gain, the electronic device 101 may increase the gain to the second gain after waiting for a preconfigured time (e.g., about 5 ms). Referring to FIG. 10A, the OIS carrier may move from a point "a" to a point "b" during the preconfigured time. As shown in FIG. 10A, a section in which the electronic device 101 changes a VCM gain from the first gain to the second gain may be a gain adjustment section.

The electronic device 101 may configure the VCM gain to a third gain after the predetermined time and may move the OIS carrier to a target position (945). The electronic device 101 may initialize an integrated value of a gyro signal (950). The gyro sensor may continuously detect shaking information (or position information) of the electronic device and may transmit the detected information to the OIS controller. The OIS controller may include an integrator, and the integrator may continuously accumulate the sensed information. When the OIS carrier is positioned at a point "c" (a target position or a central position), the OIS controller may calculate a tilted angle of the electronic device 101 based on an angle of the electronic device 101 at a time when the OIS carrier reaches the point "c". If an accumulated value related to the angle is applied, target information calculated at the point "c" may deviate from a central position, and the OIS carrier may need to move with a large displacement immediately after moving to the point "c". Accordingly, the electronic device 101 may initialize the accumulated value related to the angle to prevent the OIS carrier, which has moved to the central position, from instantaneously moving to another position. As shown in FIG. 10B, after the second noise reduction process is completed, the electronic device 101 may control the OIS carrier based on the central position (e.g., the point "c"). As an example, when the first noise reduction process is completed, the electronic device 101 may operate the camera 180 in the mode stored in the memory 130 (955).

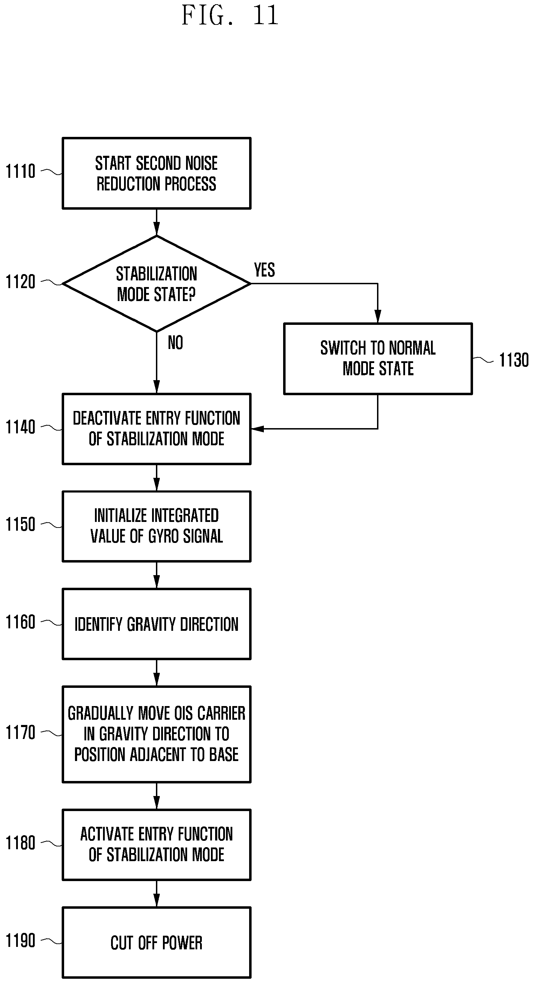

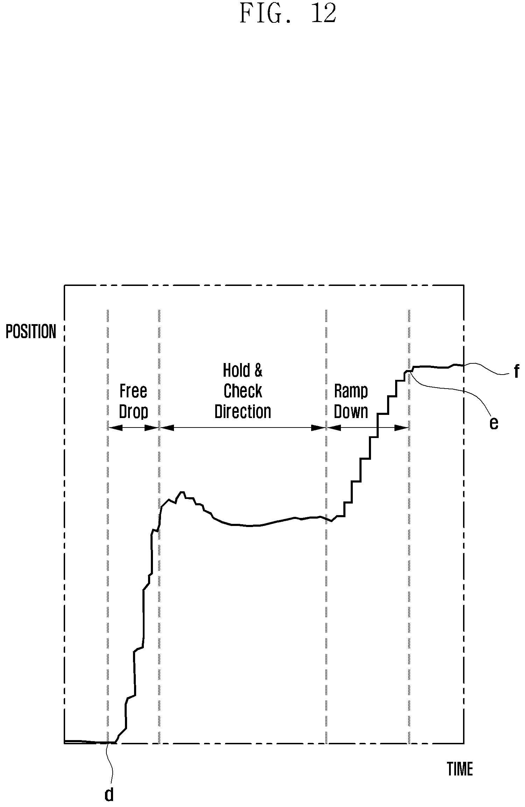

FIG. 11 is a flowchart illustrating a second noise reduction process performed when power to an OIS module is cut off according to various embodiments, and FIG. 12 illustrates a position of an OIS carrier during the second noise reduction process according to various embodiments. The following description will be made with reference to FIG. 11 and FIG. 12.

In the following embodiments, respective operations may be performed sequentially, but are not necessarily performed sequentially. For example, an order of the respective operations may be changed, and at least two operations may be performed in parallel.

According to an embodiment, operations 1110 to 1190 may be understood as being performed by a processor (e.g., the processor 120 of FIG. 2 or the OIS controller 125 of FIG. 3) of an electronic device (e.g., the electronic device 101 of FIG. 2).

Referring to FIG. 11, when power to the camera 180 is cut off according to switching of the camera 180, the electronic device 101 may start the second noise reduction process before the power is cut off (1110). The electronic device 101 may support a stabilization mode. As an example, the electronic device 101 may store a current mode in the memory 130. The electronic device 101 may identify whether a current state is a stabilization mode or a normal mode (1120). When the current state is the stabilization mode (1120-YES), the electronic device 101 may switch the current state to the normal mode (1130) and may deactivate an entry function of the stabilization mode (1140). When the current state is not the stabilization mode (or is the normal mode) (1120-NO), the electronic device 101 may deactivate the entry function of the stabilization mode (1140).

After deactivating the entry function of the stabilization mode, the electronic device 101 may initialize an integrated value of a gyro signal (or an accumulated value related to an angle of the electronic device 101) (1150). As an example, when the electronic device 101 does not support the stabilization mode, the electronic device 101 may initialize the integrated value of the gyro signal without performing a current state determination process and a mode switching process (or a current state determination operation and a mode switching operation) (1150).

The electronic device 101 may identify a gravity direction (1160). For example, the electronic device 101 may identify the gravity direction by detecting a change of a magnetic force using a Hall sensor. The electronic device 101 may temporarily cut off power to the OIS module for a preconfigured time. Due to the cut-off of power, the OIS carrier may freely fall in the gravity direction.

Referring to FIG. 12, a point "d" may be an initial position (or a central position) of the OIS carrier when the second noise reduction process starts, and a free drop section may be a section in which the OIS carrier freely falls due to gravity. As the OIS carrier freely falls, a magnet included in the second OIS carrier may move, and a magnetic force detected by the Hall sensor may change according to movement of the magnet. The electronic device 101 may identify a gravity direction (check direction in FIG. 12) based on a sign and a magnitude of the changing magnetic force. The electronic device 101 may resupply power that has been temporarily cut off and may identify the gravity direction. In this case, the OIS carrier may maintain (hold in FIG. 12) a position within a predetermined range as shown in FIG. 12.

Alternatively, the electronic device 101 may identify the gravity direction (check direction in FIG. 12) based on an acceleration value and/or an angular velocity value detected by an acceleration sensor and/or an angular velocity sensor. Alternatively, when the electronic device 101 cannot identify the gravity direction based on the detected acceleration value and/or angular velocity value, the electronic device 101 may determine a preconfigured direction as the gravity direction. For example, the preconfigured direction may be a direction having a dominant value among acceleration values and/or angular velocity values detected for a predetermined time or longer.

The electronic device 101 may gradually move the OIS carrier in the gravity direction to a position adjacent to a base (1170). Referring to FIG. 12, as shown in a ramp-down section, a position of the OIS carrier may gradually decrease (e.g., may gradually move to a position of the base). The electronic device 101 may gradually move the OIS carrier to a position adjacent to the base (e.g., a point "e" in FIG. 12). For example, the position adjacent to the base may be a position predetermined through calibration. The position determined through calibration may be a position including a predetermined margin from the base and may be a maximum position to which movement may be controlled from a central position. Accordingly, the electronic device 101 may gradually move the OIS carrier to the position determined through calibration. When the OIS carrier moves to the position determined through calibration, the electronic device 101 may activate the deactivated entry function of the stabilization mode (1180) and may cut off power to the camera 180 (1190). Referring to FIG. 12, the OIS carrier may move to a point "e" (e.g., the position determined through calibration), and when power to the camera 180 is cut off, may move to a point "f" (e.g., the base). As an example, when the second noise reduction process is completed, the electronic device 101 may operate the camera 180 in a mode stored in the memory 130.

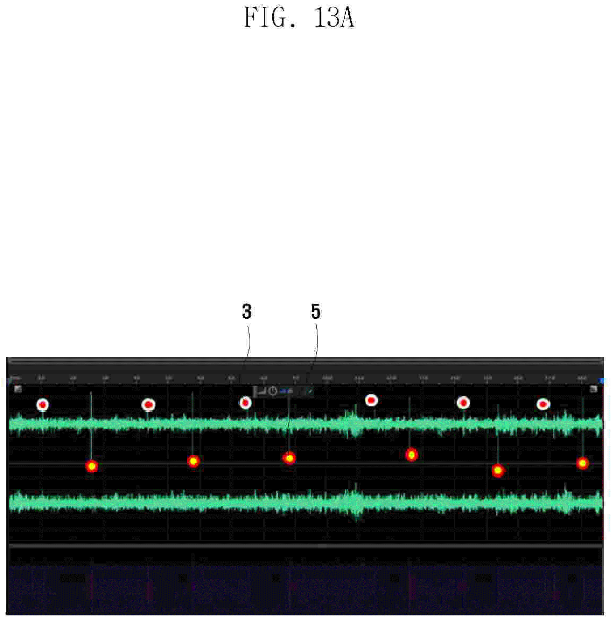

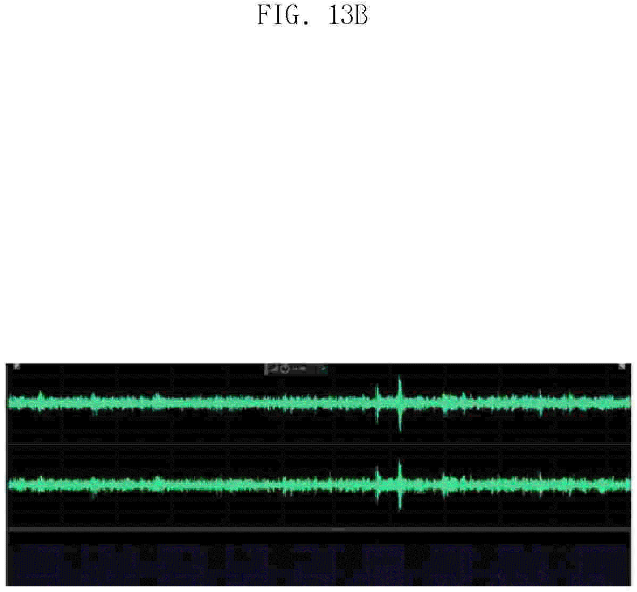

FIG. 13A and FIG. 13B each illustrate a recorded sound before and after performing a noise reduction process according to various embodiments.

Referring to FIG. 13A, a recorded signal in a state in which a camera has been switched without performing a noise reduction process is illustrated. According to a change in a field of view, the plurality of cameras 180 may be switched, and an OIS module of each camera 180 may be turned on (5) or turned off (3). When the OIS module is turned on (5) or turned off (3), an impact noise due to a collision between the OIS carrier and the camera housing may be generated, and the generated impact noise may be recorded. In FIG. 13A, a signal represented as an impulse may correspond to the recorded collision noise.

Referring to FIG. 13B, a recorded signal in a state in which a camera has been switched while performing the noise reduction process is illustrated. When the electronic device 101 performs the noise reduction process, the collision noise between the OIS carrier and the camera housing may be reduced (or removed). Accordingly, as shown in FIG. 13B, unnecessary collision noise may not appear in recorded data.

Various embodiments of the disclosure may reduce acoustic noise generated when power is supplied to or cut off from an OIS module. Accordingly, various embodiments of the disclosure may prevent acoustic noise from being recorded during video capture.

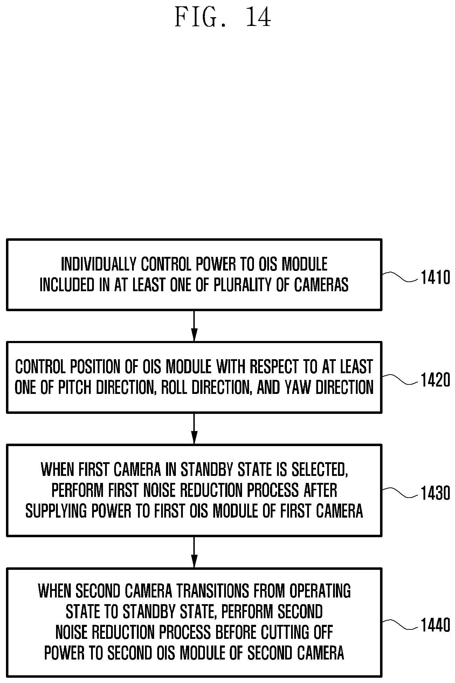

FIG. 14 is a flowchart illustrating a noise reduction process according to various embodiments.

In the following embodiments, respective operations may be performed sequentially, but are not necessarily performed sequentially. For example, an order of the respective operations may be changed, and at least two operations may be performed in parallel.

According to an embodiment, operations 1410 to 1440 may be understood as being performed by a processor (e.g., the processor 120 of FIG. 2 or the OIS controller 125 of FIG. 3) of an electronic device (e.g., the electronic device 101 of FIG. 2).

Referring to FIG. 14, the electronic device 101 may include a plurality of cameras 180. At least one of the plurality of cameras 180 may include an OIS module. The electronic device 101 may individually control power to the OIS modules included in the plurality of cameras 180 (1410). The OIS module may include an OIS carrier and a VCM driver and may control a position with respect to pitch, roll, and/or yaw directions (1420).

A user may adjust a field of view of the camera 180 while capturing an image. The electronic device 101 may select (or switch to) one camera based on the adjusted field of view and may continue capturing using the selected camera. For example, the plurality of cameras 180 may include a first camera 180a and a second camera 180b. The second camera 180b may be in an operating state, and the first camera 180a may be in a standby state. When the field of view is changed while the second camera 180b is operating, the first camera 180a may be selected. The electronic device 101 may cut off power to the second camera 180b (or a second OIS module) and may supply power to the first camera 180a (or a first OIS module). The electronic device 101 may perform a first noise reduction process after power is supplied and may perform a second noise reduction process before power is cut off. For example, when the first camera 180a in the standby state is selected, the electronic device 101 may perform the first noise reduction process after supplying power to the first OIS module of the first camera 180a (1430).

As an example, the electronic device 101 may first identify a position of the first OIS carrier included in the first OIS module. The electronic device 101 may identify the position of the first OIS carrier before supplying power to the first VCM driver. Then, after supplying power to the first VCM driver, the electronic device 101 may perform the first noise reduction process by gradually moving the first OIS carrier to a target position. When power to the first OIS module is cut off, the first OIS carrier may be positioned at a base. A position of the base may be a maximum position to which the first OIS carrier moves in the gravity direction. The electronic device 101 may gradually move the first OIS carrier from the base to the target position. The target position may be a preconfigured central position.

The electronic device 101 may move the first OIS carrier while increasing a gain of the first VCM driver included in the first OIS module from a first gain to a second gain during a preconfigured time. For example, the first gain may be the smallest gain among gains of the first VCM driver. The electronic device 101 may increase the gain from the first gain to the second gain continuously or discontinuously. After moving the first OIS carrier while increasing the gain during the preconfigured time, the electronic device 101 may configure the gain of the first VCM driver to a third gain and may move the first OIS carrier to a target position. As an example, the second gain and the third gain may be the same gain. When the first OIS carrier is moved to the target position, the electronic device 101 may initialize an accumulated value related to an angle (e.g., an integrated value of a gyro signal) and may terminate the first noise reduction process.

For example, when the second camera 180b transitions from an operating state to a standby state, the electronic device 101 may perform the second noise reduction process before cutting off power to the second OIS module of the second camera 180b (1440). The electronic device 101 may perform the second noise reduction process by gradually moving, in a gravity direction, the second OIS carrier included in the second OIS module to a position adjacent to a base before cutting off power to the second OIS module of the second camera 180b. For example, a position of the base may be a maximum position to which the second OIS carrier is movable in the gravity direction.

The electronic device 101 may identify a gravity direction. For example, the electronic device 101 may identify the gravity direction based on changing magnetic force information, acceleration, and/or angular velocity values. The electronic device 101 may move the OIS carrier in the gravity direction. The electronic device 101 may gradually move the OIS carrier to a position adjacent to the base. When the OIS carrier moves to a position determined through calibration, the electronic device 101 may cut off power.

When the camera 180 supports a stabilization mode, the electronic device 101 may deactivate an entry function of the stabilization mode and may perform the noise reduction process. When the noise reduction process is completed, the electronic device 101 may activate the entry function of the stabilization mode.

The electronic device and the noise reduction process of the disclosure are for reducing acoustic noise generated when power is supplied to or cut off to an OIS module.

In an example, an electronic device 101 performing a noise reduction process of a camera 180 may include a plurality of cameras 180 including a first camera 180a and a second camera 180b, at least one processor 120, and a memory 130 configured to store instructions that are executed by the at least one processor 120. At least one of the plurality of cameras 180 may include an OIS module. The optical image stabilization (OIS) module may include an OIS carrier including at least one of a lens, an image sensor, and a prism, and a voice coil motor (VCM) driver. The OIS module may control a position in at least one of a pitch direction, a roll direction, and a yaw direction. The instructions stored in the memory 130 may cause the electronic device to individually control power to the OIS module. The instructions stored in the memory 130 may cause the electronic device to, when the first camera 180a in a standby state is selected, perform a first noise reduction process after supplying power to a first OIS module of the first camera 180a. The instructions stored in the memory 130 may cause the electronic device to, when the second camera 180b transitions from an operating state to a standby state, perform a second noise reduction process before cutting off power to a second OIS module of the second camera 180b.

For example, the instructions stored in the memory 130 may cause the electronic device to identify a position of a first OIS carrier included in the first OIS module before supplying power to a first VCM driver included in the first OIS module. The instructions stored in the memory 130 may cause the electronic device to perform, after supplying power to the first VCM driver, the first noise reduction process by gradually moving the first OIS carrier to a target position.

For example, the instructions stored in the memory 130 may cause the electronic device to move the first OIS carrier while increasing a gain of the first VCM driver from a first gain to a second gain during a preconfigured first time. The instructions stored in the memory 130 may cause the electronic device to configure the gain of the first VCM driver to a third gain during the remaining time to move the first OIS carrier to the target position.

In an example, the second gain and the third gain may be identical.

In an example, the instructions stored in the memory 130 may cause the electronic device to increase a gain from the first gain to the second gain continuously or discontinuously in at least one step.

In an example, the first gain may be the smallest gain among gains of the first VCM driver.

In an example, the instructions stored in the memory 130 may cause the electronic device to initialize an accumulated value related to an angle of the electronic device 101 when the first OIS carrier is moved to the target position.

In an example, the instructions stored in the memory 130 may cause the electronic device to, when the stabilization mode for suppressing control of the first camera is supported, deactivate an entry function of a stabilization mode before performing the first noise reduction process and activate the entry function of the stabilization mode when the first noise reduction process is completed.

In an example, the instructions stored in the memory 130 may cause the electronic device to perform, before cutting off power to the second OIS module, the second noise reduction process by gradually moving, in a gravity direction, a second OIS carrier included in the second OIS module to a position adjacent to a base.

In an example, a position of the base may be a maximum position to which the second OIS carrier is movable in the gravity direction.

In an example, the instructions stored in the memory 130 may cause the electronic device to temporarily cut off power to the second OIS module during a preconfigured second time. The instructions stored in the memory 130 may cause the electronic device to, based on a value of a change of a magnetic force according to movement of the second OIS carrier, identify a direction of the change of the magnetic force. The instructions stored in the memory 130 may cause the electronic device to determine the gravity direction based on the identified direction of the change.

In an example, the instructions stored in the memory 130 may cause the electronic device to determine the gravity direction based on an acceleration value of the electronic device.

In an example, the OIS module may include at least one of a gyro sensor, an OIS controller, and a Hall processor.

In an example, the instructions stored in the memory 130 may cause the electronic device to control the second camera to capture video and switch from the second camera to the first camera in a standby state based on a change in a field of view according to a user input.

In an example, a noise reduction process of an electronic device 101 may be executed in the electronic device 101 including a plurality of cameras 180 including a first camera 180a and a second camera 180b. A method may include individually controlling power to an optical image stabilization (OIS) module included in at least one of the plurality of cameras 180. The OIS module may control a position in at least one of a pitch direction, a roll direction, and a yaw direction. The method may, when the first camera 180a in a standby state is selected, perform a first noise reduction process after supplying power to a first OIS module of the first camera 180a. The method may, when the second camera 180b transitions from an operating state to a standby state, perform a second noise reduction process before cutting off power to a second OIS module of the second camera 180b.

In an example, the method may identify a position of a first OIS carrier included in the first OIS module before supplying power to a first VCM driver included in the first OIS module. The performing of the first noise reduction process may include moving the first OIS carrier gradually to a target position after supplying power to the first VCM driver.

In an example, the performing of the first noise reduction process may include moving the first OIS carrier while increasing a gain of the first VCM driver from a first gain to a second gain during a preconfigured first time. The performing of the first noise reduction process may include configuring the gain of the first VCM driver to a third gain during the remaining time and moving the first OIS carrier to the target position.

In an example, the second gain and the third gain may be the same gain.

In an example, the performing of the first noise reduction process may include increasing from the first gain to the second gain continuously or discontinuously in at least one step.

In an example, the first gain may be the smallest gain among gains of the first VCM driver.

In an example, the performing of the first noise reduction process may include, when the first OIS carrier is moved to the target position, initializing an accumulated value related to an angle of the electronic device 101.

In an example, the performing of the first noise reduction process may include, when a stabilization mode for suppressing control of the first camera is supported, deactivating an entry function of the stabilization mode before performing the first noise reduction process and activating the entry function of the stabilization mode when the first noise reduction process is completed.

In an example, the performing of the second noise reduction process may include, before cutting off power to the second OIS module, moving, in a gravity direction, a second OIS carrier included in the second OIS module gradually to a position adjacent to a base.

In an example, a position of the base may be a maximum position to which the second OIS carrier is movable in the gravity direction.

In an example, the performing of the second noise reduction process may include temporarily cutting off power to the second OIS module during a preconfigured second time. The performing of the second noise reduction process may include identifying, based on a value of a change of a magnetic force according to movement of the second OIS carrier, a direction of the change of the magnetic force. The performing of the second noise reduction process may include determining the gravity direction based on the identified direction of the change.

In an example, the performing of the second noise reduction process may include determining the gravity direction based on an acceleration value of the electronic device 101.

In an example, the method may include controlling the second camera to capture video. The method may include switching from the second camera to the first camera in the standby state based on a change in a field of view according to a user input.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects of the disclosure are not limited to the effects described above, and other effects not mentioned herein will be clearly understood by those skilled in the art from the above description.

## Claims

1. An electronic device comprising:
a plurality of cameras (180) comprising a first camera (180a) and a second camera (180b);
at least one processor (120); and
a memory (130) configured to store instructions that are executed by the at least one processor (120),
wherein at least one of the plurality of cameras (180) comprises an optical image stabilization (OIS) module,
wherein the OIS module comprises an OIS carrier comprising at least one of a lens, an image sensor, and a prism, and a voice coil motor (VCM) driver, and controls a position in at least one of a pitch direction, a roll direction, and a yaw direction, and
wherein the instructions stored in the memory (130) cause the electronic device to:
individually control power to the OIS module;
in case that the first camera (180a) in a standby state is selected, perform a first noise reduction process after supplying power to a first OIS module of the first camera (180a); and
in case that the second camera (180b) transitions from an operating state to a standby state, perform a second noise reduction process before cutting off power to a second OIS module of the second camera (180b).

2. The electronic device of claim 1, wherein the instructions stored in the memory (130) cause the electronic device to:
identify a position of a first OIS carrier included in the first OIS module before supplying power to a first VCM driver included in the first OIS module; and
after supplying power to the first VCM driver, perform the first noise reduction process by gradually moving the first OIS carrier to a target position.

3. The electronic device of claim 2, wherein the instructions stored in the memory (130) cause the electronic device to:
move the first OIS carrier while increasing a gain of the first VCM driver from a first gain to a second gain during a preconfigured first time; and
during a remaining time, configure the gain of the first VCM driver to a third gain to move the first OIS carrier to the target position.

4. The electronic device of claim 3, wherein the second gain and the third gain are identical.

5. The electronic device of claim 3, wherein the instructions stored in the memory (130) cause the electronic device to increase the gain from the first gain to the second gain continuously or discontinuously in at least one step.

6. The electronic device of claim 3, wherein the first gain is a smallest gain among gains of the first VCM driver.

7. The electronic device of claim 2, wherein the instructions stored in the memory (130) cause the electronic device to, in case that the first OIS carrier is moved to the target position, initialize an accumulated value related to an angle of the electronic device.

8. The electronic device of claim 1, wherein the instructions stored in the memory (130) cause the electronic device to:
in case that a stabilization mode for suppressing control of the first camera is supported, deactivate an entry function of the stabilization mode before performing the first noise reduction process; and
in case that the first noise reduction process is completed, activate the entry function of the stabilization mode.

9. The electronic device of claim 1, wherein the instructions stored in the memory (130) cause the electronic device to, before cutting off power to the second OIS module, perform the second noise reduction process by gradually moving, in a gravity direction, a second OIS carrier included in the second OIS module to a position adjacent to a base.

10. The electronic device of claim 9, wherein a position of the base is a maximum position to which the second OIS carrier is movable in the gravity direction.

11. The electronic device of claim 9, wherein the instructions stored in the memory (130) cause the electronic device to:
temporarily cut off power to the second OIS module during a preconfigured second time;
based on a value of a change of a magnetic force according to movement of the second OIS carrier, identify a direction of the change of the magnetic force; and
determine the gravity direction based on the identified direction of the change.

12. The electronic device of claim 9, wherein the instructions stored in the memory (130) cause the electronic device to determine the gravity direction based on an acceleration value of the electronic device.

13. The electronic device of claim 1, wherein the OIS module comprises at least one of a gyro sensor, an OIS controller, and a Hall processor.

14. The electronic device of claim 1, wherein the instructions stored in the memory (130) cause the electronic device to:
control the second camera to capture video; and
based on a change in a field of view according to a user input, switch from the second camera to the first camera in a standby state.

15. A method executed in an electronic device comprising a plurality of cameras (180) comprising a first camera (180a) and a second camera (180b), the method comprising:
individually controlling power to an optical image stabilization (OIS) module included in at least one of the plurality of cameras (180);
controlling, by the OIS module, a position in at least one of a pitch direction, a roll direction, and a yaw direction;
in case that the first camera (180a) in a standby state is selected, performing a first noise reduction process after supplying power to a first OIS module of the first camera (180a); and
in case that the second camera (180b) transitions from an operating state to a standby state, performing a second noise reduction process before cutting off power to a second OIS module of the second camera (180b).
